# FASCICULE DE BREVET EUROPEEN

(11) **EP 0 521 090 B1**
(45) Date de publication et mention de la délivrance du brevet: **27.04.1994**
(21) Numéro de dépôt: 91907111.8
(22) Date de dépôt: 21.03.1991
(51) Int. Cl.: G01N 30/32, G05D 16/20, F15B 5/00

(54) **SYSTEME DE REGULATION DE PRESSION DANS UN CIRCUIT OUVERT DE CIRCULATION DE FLUIDE A DEBIT DETERMINE**
DRUCKREGELSYSTEM IN EINEM OFFENEN KREIS FÜR UMLAUFENDE FLÜSSIGKEIT BEI VORGEGEBENEM VOLUMENSTROM
SYSTEM FOR REGULATING THE PRESSURE IN AN OPEN FLUID CIRCUIT WITH A GIVEN FLOW RATE

(30) Priorité: 21.03.1990 FR 9003617
(43) Date de publication de la demande: 07.01.1993
(73) Titulaire: GILSON MEDICAL ELECTRONICS (FRANCE), F-95400 Villiers Le Bel (FR)
(72) Inventeur: ROBERT, Jean-Claude, F-93330 Neuilly sur Marne (FR); MARIN MARTINOD, Thierry, F-95590 PreslesLa-Vallée (FR); HONORE, Gilles, F-75017 Paris (FR); MARTEAU D'AUTRY, Eric, F-75004 Paris (FR)
(74) Mandataire: Schrimpf, Robert
(86) Numéro de dépôt international: FR9100231
(87) Numéro de publication internationale: WO9114941

(56) Documents cités:
- EP-A- 0 088 371
- EP-A-00 464 31
- GB-A- 1 291 724
- GB-A- 2 137 319
- US-A- 4 638 444
- US-A- 4 814 089

## Description

La présente invention concerne un système de régulation de la pression en un point donné d'un dispositif de circulation de fluide fonctionnant en circuit ouvert et à débit déterminé.

L'invention trouve une application avantageuse dans le domaine de la circulation des fluides en circuit ouvert, à chaque fois que l'on veut amener ou maintenir la pression en un point donné à une valeur de consigne, et ceci quel que soit le niveau du débit. Le système de régulation de pression, objet de l'invention, s'applique plus particulièrement à la chromatographie en phase liquide mettant en jeu un fluide supercritique.

La technique récente de chromatographie dite "supercritique" utilise dans la phase mobile d'entraînement du gaz carbonique liquide qui, au niveau de la colonne de séparation, est mis en phase supercritique dans laquelle le fluide CO₂ a l'aspect d'un liquide mais la viscosité d'un gaz, ce qui lui permet de traverser facilement la colonne chromatographique tout en restant mélangé aux autres liquides participant éventuellement à ladite phase mobile. Un autre avantage du gaz carbonique dans ce type de réacteurs réside dans le fait qu'il est moins cher, moins polluant que les solvants habituellement utilisés, lesquels exigent par ailleurs d'être récupérés et traités, alors qu'il suffit pour le gaz carbonique de le laisser s'échapper dans l'atmosphère. Les chromatographes en phase liquide constituent un circuit ouvert dans lesquels les fluides circulent entre au moins une pompe d'alimentation de la phase mobile et les collecteurs de sortie en passant par l'injecteur du produit à analyser, la colonne de séparation, et le détecteur. Les informations fournies par le détecteur se présentent sous la forme d'enregistrements donnant la position des pics chromatographiques en fonction du temps ; c'est pourquoi le débit de fluide dans l'appareil doit être parfaitement contrôlé. Les pompes d'alimentation utilisées sont en général des pompes débimétriques haute pression à piston fournissant un débit contrôlé à ± 1% près.

Pour obtenir le gaz carbonique dans sa phase supercritique, il faut l'amener dans une certaine gamme de température et de pression. Typiquement, le CO₂ est acheminé sous forme liquide jusqu'à la colonne chromatographique par une pompe débimétrique par exemple. La colonne est placée dans un four à la température à laquelle le gaz carbonique est supercritique lorsque la pression est dans une gamme déterminée. Dans le but de parfaitement contrôler cette pression afin de la maintenir constante à une valeur de consigne donnée ou la faire varier d'une valeur de consigne à une autre, il est nécessaire de pouvoir disposer, d'une façon générale, d'un système de régulation de la pression en un point donné d'un dispositif de circulation de fluide fonctionnant en circuit ouvert et à débit déterminé.

On connaît déjà par le document US-4 638 444 un système de régulation de la pression en un point donné d'un dispositif de circulation de fluide fonctionnant en circuit ouvert et à débit déterminé. Ce système comprend une chambre munie d'un orifice d'entrée et d'un orifice de sortie, ainsi qu'une bobine disposée à l'extérieur de la chambre. Cette chambre est placée en aval du point où la régulation est réalisée. Le courant d'alimentation de la bobine est déterminé par un comparateur qui effectue une comparaison entre la pression mesurée par un capteur et une valeur de consigne.

Un organe de régulation de la pression est susceptible d'être déplacé par cette bobine par rapport à l'orifice de sortie de la chambre. Cet organe est maintenu, lorsqu'il n'est pas activé par la bobine, sur l'orifice de sortie par un ressort.

L'invention propose quant à elle un système de régulation de la pression en un point donné d'un dispositif de circulation de fluide fonctionnant en circuit ouvert et à débit déterminé, comportant, d'une part, une chambre disposée en aval du point donné et comportant un orifice d'entrée et un orifice de sortie dudit fluide, et, d'autre part, un organe mobile en translation par rapport à l'un de ces deux orifices, le déplacement de cet organe dans un sens par rapport à cet orifice étant commandé par une bobine extérieure à la chambre et dont le courant d'alimentation est déterminé par un comparateur effectuant une comparaison entre ladite pression, mesurée par un capteur, et une valeur de consigne,caractérisé en ce que l'organe est une paroi qui s'étend au droit de l'orifice d'entrée, cette paroi étant solidaire d'un aimant soumis à l'action du champ magnétique fournie par la bobine, ce champ magnétique déplaçant ledit aimant et ladite paroi vers ledit orifice d'entrée.

Ainsi, lorsque le comparateur détecte une différence entre la pression mesurée et la pression de consigne, les moyens de déplacement sont mis en oeuvre de manière à rapprocher ou éloigner la paroi mobile de l'orifice d'entrée, ce qui a pour effet d'augmenter ou de diminuer la pression en amont du système de régulation, par une obturation plus ou moins grande du jet de fluide au niveau de l'orifice d'entrée. Conformément à l'objectif fixé, cette régulation est réalisée indépendamment du débit.

D'autre part, le système selon l'invention présente de nombreux avantages : il est mécaniquement stable, les pièces en contact avec le liquide sont peu nombreuses et peuvent être de réalisation très simple, le volume mort à l'intérieur de la chambre est très faible. En outre, si le débit d'une pompe d'alimentation varie un court instant, le comparateur détectera une variation de pression au point de mesure et provoquera une réaction des moyens de déplacement de la paroi mobile dans un sens qui aura tendance à minimiser les effets de cette variation de débit dans le circuit amont. Enfin, il convient de signaler que le système de régulation selon l'invention s'adapte automatiquement à la viscosité des différents fluides utilisés, il n'est pas nécessaire en particulier de modifier le diamètre de l'orifice d'entrée.

Dans un premier mode de réalisation particulier, ladite paroi mobile est formée par une face d'extrémité d'un piston cylindrique coulissant dans un alésage, tandis que dans un deuxième mode de réalisation elle est formée par un disque. Ces deux variantes d'exécution du système de régulation, objet de l'invention, comportent des moyens de déplacement qui peuvent être constitués par un aimant solidaire de la paroi mobile et soumis à l'action d'un champ magnétique fourni par une bobine extérieure à la chambre et dont le courant d'alimentation est déterminé par ledit comparateur. Dans un deuxième mode de réalisation du système de régulation selon l'invention, ladite paroi mobile est constituée par une face d'un élément piézoélectrique dont la tension de commande est déterminée par ledit comparateur, ladite face se rapprochant plus ou moins de l'orifice d'entrée en fonction de la tension appliquée à l'élément piézoélectrique. Ces moyens de déplacement étant commandés à distance, il est possible d'envisager qu'à l'exception des orifices d'entrée et de sortie, ladite chambre soit fermée. Dans ces conditions, on constate que le système de régulation conforme à l'invention fonctionne sans utiliser de ressort et est parfaitement étanche sans nécessiter de joints ou équivalents entre des pièces fixées et des pièces mobiles, ce qui est particulièrement important lorsque le fluide employé est du gaz carbonique supercritique.

La description qui va suivre en regard des dessins annexés, fera bien comprendre en quoi consiste l'invention et comment elle peut être réalisée.
- La figure 1 est une coupe d'un premier mode de réalisation d'un système de régulation selon l'invention.
- La figure 2 est une coupe d'une variante du mode de réalisation de la figure 1.
- La figure 3 est une coupe d'un deuxième mode de réalisation de l'invention.
- La figure 4 est le schéma d'un chromatographe supercritique utilisant un système de régulation selon l'invention.

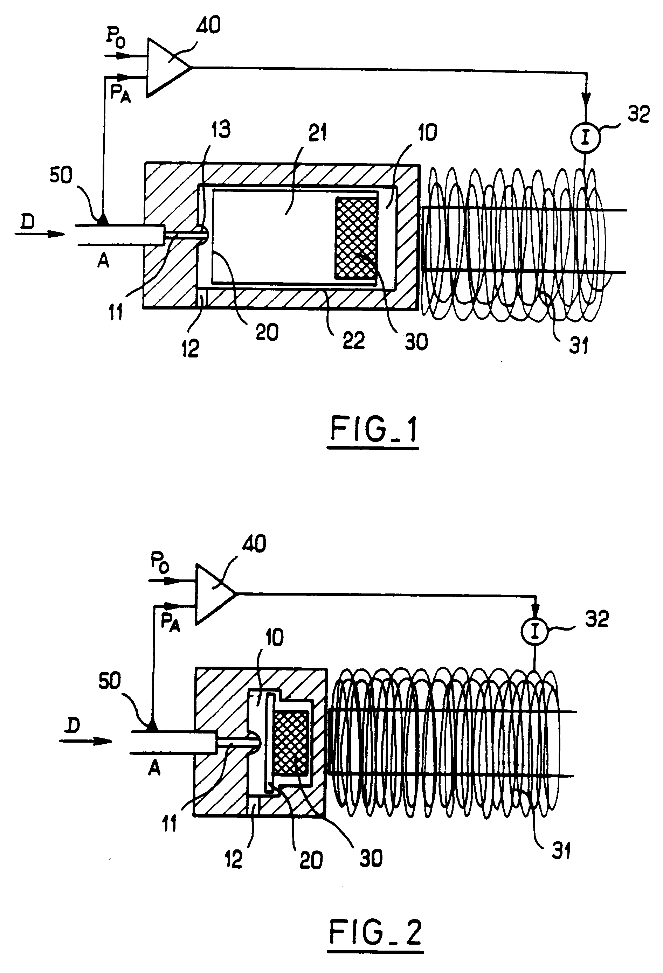

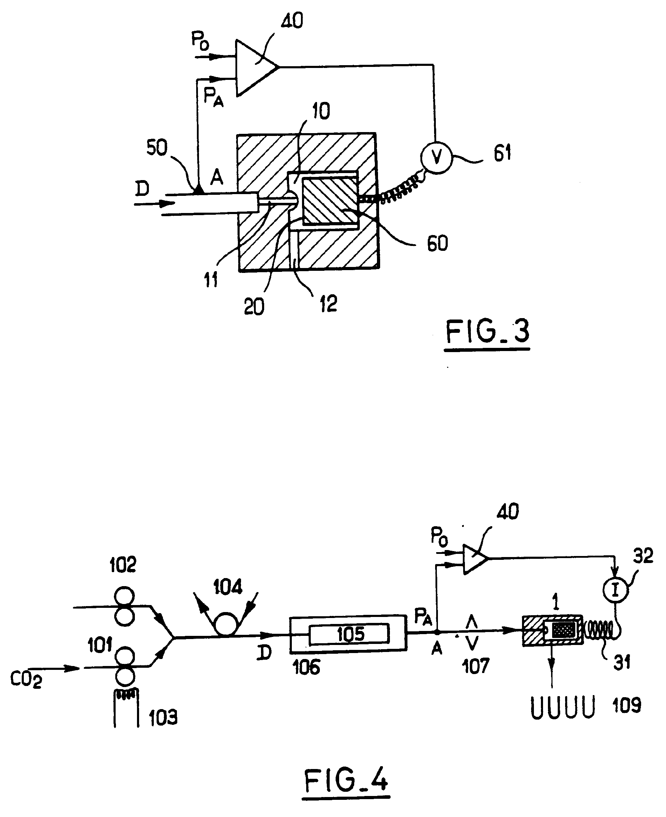

La figure 1 montre, en coupe, un système 1 de régulation de la pression P_{A} en un point donné A d'un dispositif de circulation de fluide, non représenté sur la figure 1, mais dont un exemple est fourni par la figure 4. Le dispositif de circulation de fluide considéré ici fonctionne en circuit ouvert et à débit D déterminé. Le système 1 de régulation de la figure 1 comprend une chambre 10 disposée en aval du point A et qui comporte un orifice 11 d'entrée et un orifice 12 de sortie dudit fluide. Ledit orifice 11 d'entrée débouche dans la chambre 10 sensiblement perpendiculairement à une paroi 20 mobile en translation sous l'action de moyens 30, 31 de déplacement commandés par un comparateur 40 effectuant une comparaison entre ladite pression P_{A}, mesurée par un capteur 50, et une valeur P_{O} de consigne. Dans l'exemple de la figure 1, la paroi mobile 20 est formée par une face d'extrémité d'un piston 21 cylindrique coulissant dans un alésage 22 fermé. Les moyens de déplacement sont constitués par un aimant 30, placé dans le piston 21, et donc solidaire de la paroi mobile 20, ledit aimant étant soumis à l'action d'un champ magnétique fourni par une bobine 31 dont le courant I d'alimentation est déterminé par le comparateur 40.

Si la pression P_{A} mesurée par le capteur 50 est inférieure à la valeur de la pression P_{O} de consigne imposée par l'opérateur, le comparateur détecte cette différence et commande le circuit 32 d'alimentation de la bobine 31 de sorte que la variation de courant I qui en découle produise sur l'aimant 30 une force ayant pour effet de rapprocher la paroi mobile 20 de l'orifice 11 d'entrée, provoquant ainsi une certaine obturation de la veine de fluide sortant de l'orifice 11 d'entrée. Le système 1 de régulation fonctionnant à débit D donné, la perte de charge supplémentaire résultant de l'obturation de l'écoulement a pour conséquence de faire remonter la pression P_{A} en amont du système jusqu'à atteindre la pression P_{O} de consigne. Quand l'égalité des pressions est atteinte, le comparateur 40 cesse d'être actif.

Le phénomène inverse se produit symétriquement lorsque la pression P_{A} est supérieure à la pression P_{O} de consigne.

Comme on peut le constater sur l'exemple de réalisation de la figure 1, le piston 21 se déplace dans l'alésage 22 sous l'action de la force électromagnétique produite par la bobine 31 placée à l'extérieur de la chambre 10 qui agit sur l'orifice 11 d'entrée et le jet de fluide qui en sort soit dans le sens de la fermeture et de l'obturation, soit dans le sens de l'ouverture et du libre échappement. Le système de régulation fonctionne donc sans aucun ressort et sans aucun problème d'étanchéité vis-à-vis du fluide en circulation qui exigerait la présence de joints dynamiques entre des pièces fixes et des pièces en mouvement.

Selon un mode de réalisation particulier de l'invention, l'orifice 11 d'entrée débouche dans la chambre 10 par une zone bombée 13 formant saillie à l'intérieur de la chambre. Cette caractéristique présente l'avantage de donner au système 1 de régulation une plus grande sensibilité en ce sens qu'une même variation de pression amont pourra être obtenue pour un déplacement plus faible de la paroi mobile 20, et donc pour une variation du courant I plus faible. Il en résulte un meilleur temps de réponse du système.

La figure 2 montre une variante d'exécution de l'invention dans laquelle la paroi mobile 20 est un disque dont la distance à l'orifice 11 d'entrée peut être réglée par des moyens de déplacement constitués par une bobine 31 analogue à celle décrite précédemment. Ce mode de réalisation présente les mêmes avantages que celui de la figure 1, à savoir l'absence de dispositif de rappel à ressort et de problème d'étanchéité lié aux pièces mobiles. Il présente en plus l'avantage de réduire les volumes morts à l'intérieur de l'alésage, ainsi que les surfaces en frottement autour du piston.

La figure 3 montre un deuxième mode de réalisation dans laquelle la paroi mobile 20 est constituée par la face avant d'un élément piézoélectrique. Le déplacement de cette paroi, qui constitue la face arrière de la chambre, est obtenu en faisant varier la tension V de commande de l'élément piézoélectrique. Ce mode de réalisation présente l'avantage de réduire encore le volume mort et d'éliminer tous frottements.

La figure 4 est le schéma d'un chromatographe utilisant une phase mobile comportant, au moins, un fluide susceptible de donner une phase supercritique, du gaz carbonique par exemple. Comme le montre la figure 4, CO₂ est introduit dans le chromatographe par une pompe débimétrique 101, de préférence une pompe à piston fonctionnant sous une pression d'environ 600 bars. L'alimentation en gaz carbonique est fournie par une bouteille, non représentée, de CO₂ comprimé, lequel est amené en phase liquide par un dispositif de refroidissement 103, notamment à effet Peltier. Une deuxième pompe débimétrique 102 de même type permet d'injecter dans la phase mobile un autre liquide destiné à prendre part à la séparation. En sortie des pompes 101, 102, un injecteur 104 introduit dans le chromatographe l'échantillon liquide à analyser. Le mélange sortant de l'injecteur sous un débit contrôlé D de 0,5 à 10 ml/s, pénètre dans une colonne 105 de séparation thermostatée dans un four 106 à une température élevée afin d'amener le gaz carbonique en phase supercritique, ce qui à ces températures exige une pression de l'ordre de 400 bars. Après passage dans la colonne 105, le fluide, chargé des divers constituants de l'échantillon, est analysé par un détecteur 107, de type absorbance, avant d'être recueilli par un collecteur 109 de fractions. Afin de pouvoir parfaitement contrôler la pression de CO₂ au niveau de la colonne 105 et de maintenir ainsi le fluide en phase supercritique, le chromatographe de la figure 4 comporte, en aval de ladite colonne, un dispositif 1 de régulation conforme à l'invention, chargé de maintenir la pression P_{A} au point A du circuit à une valeur P_{O} de consigne, dont les variations au cours du temps sont fixées par l'appareil afin d'obtenir le profil de pression souhaité au cours de la séparation.

## Revendications

1. Système (1) de régulation de la pression (PA) en un point donné (A) d'un dispositif de circulation de fluide fonctionnant en circuit ouvert et à débit déterminé, comportant, d'une part, une chambre (10) disposée en aval du point donné (A) et comportant un orifice (11) d'entrée et un orifice (12) de sortie dudit fluide, et, d'autre part, un organe (20) mobile en translation par rapport à l'un (11) de ces deux orifices, le déplacement de cet organe (20) dans un sens par rapport à cet orifice étant commandé par une bobine (31) extérieure à la chambre (10) et dont le courant (I) d'alimentation est déterminé par un comparateur (40) effectuant une comparaison entre ladite pression (P_{A}) mesurée par un capteur (50), et une valeur (P_{O}) de consigne, caractérisé en ce que l'organe (20) est une paroi qui s'étend au droit de l'orifice d'entrée, cette paroi étant solidaire d'un aimant (30) soumis à l'action du champ magnétique fournie par la bobine (31), ce champ magnétique déplaçant ledit aimant (30) et ladite paroi (20) vers ledit orifice d'entrée.

2. Système (1) de régulation selon la revendication 1, caractérisé en ce que l'orifice (11) d'entrée débouche dans ladite chambre (10) par une partie bombée (13) formant saillie à l'intérieur de la chambre.

3. Système (1) de régulation selon l'une des revendications 1 ou 2, caractérisé en ce que ladite paroi mobile (20) est formée par une face d'extrémité d'un piston (21) cylindrique coulissant dans un alésage (22).

4. Système (1) de régulation selon l'une des revendications ou 2, caractérisé en ce que ladite paroi mobile (20) est formée par un disque.

5. Système (1) de régulation selon l'une des revendications 3 ou 4, caractérisé en ce que, à l'exception des orifices d'entrée (11) et de sortie (12), ladite chambre (10) est fermée.

6. Chromatographe utilisant une phase mobile comportant un fluide susceptible de donner. une phase supercritique, et comprenant au moins une pompe débimétrique (101, 102) fournissant ladite phase mobile sous un débit (D) donné, un injecteur (104) du liquide à analyser, une colonne chromatographique (106) thermostatée pour amener ledit fluide en phase supercritique, un détecteur (107) et un collecteur (109) de fractions, caractérisé en ce qu'il comporte, en aval de ladite colonne (105), un dispositif (1) de régulation de pression selon l'une quelconque des revendications 1 à 5, chargé de contrôler la pression (P_{A}) en sortie de la colonne chromatographique (105).

## Patentansprüche

1. Regelsystem (1) für den Druck (P_{A}) an einem vorgegebenen Punkt (A) einer Flüssigkeitsumlaufvorrichtung, die in einem offenen Kreis und mit vorgegebenem Volumenstrom arbeitet, welches einerseits eine stromabwärts von dem vorgegebenen Punkt (A) angeordnete Kammer (10) mit einer Eingangsöffnung (11) und einer Ausgangsöffnung (12) für die Flüssigkeit und andererseits ein bezüglich der einen (11) dieser beiden Öffnungen translatorisch bewegbares Organ (20) umfaßt, wobei die Bewegung dieses Organs (20) in einer Richtung bezüglich dieser Öffnung durch eine außerhalb der Kammer (10) befindliche Spule (31) gesteuert wird, deren Erregerstrom (I) durch einen Komparator (40) bestimmt wird, welcher einen Vergleich zwischen dem genannten, von einem Fühler (50) gemessenen Druck (P_{A}) und einem Bezugswert (P₀) durchführt, dadurch gekennzeichnet, daß das Organ (20) eine Wand ist, welche sich senkrecht zu der Eingangsöffnung erstreckt, wobei diese Wand fest mit einem Magneten (30) verbunden ist, welcher der Wirkung des von der Spule (31) erzeugten Magnetfeldes unterliegt, wobei dieses Magnetfeld den Magneten (30) und die Wand (20) zu der Eingangsöffnung hin bewegt.

2. Regelsystem (1) nach Anspruch 1, dadurch gekennzeichnet, daß die Eingangsöffnung (11) in die Kammer (10) über einen bauchförmigen, in das Innere der Kammer vorstehenden Abschnitt (13) mündet.

3. Regelsystem (1) nach Anspruch 1 oder 2, dadurch gekennzeichnet, daß die bewegliche Wand (20) durch eine Endfläche eines zylindrischen, in einer Bohrung (22) verschiebbaren Kolbens (21) gebildet ist.

4. Regelsystem (1) nach Anspruch 1 oder 2, dadurch gekennzeichnet, daß die bewegliche Wand (20) durch eine Scheibe gebildet ist.

5. Regelsystem (1) nach Anspruch 3 oder 4, dadurch gekennzeichnet, daß die Kammer (10) mit Ausnahme der Eingangsöffnung (11) und der Ausgangsöffnung (12) geschlossen ist.

6. Chromatograph zur Verwendung einer mobilen Phase, welche eine Flüssigkeit enthält, die eine überkritische Phase hervorzubringen vermag, mit mindestens einer den Durchfluß messenden Pumpe (101, 102) zur Lieferung der genannten mobilen Phase mit einem vorgegebenen Volumenstrom (D), einer Einspritzvorrichtung (104) für die zu analysierende Flüssigkeit, einer chromatographischen Säule (106) mit Temperaturregelung, um die Flüssigkeit in die überkritische Phase zu bringen, einem Fühler (107) und einem Fraktionskollektor (109), dadurch gekennzeichnet, daß er stromabwärts nach der genannten Säule (105) eine Vorrichtung (1) zur Druckregelung nach einem der Ansprüche 1 bis 5 aufweist, welche dazu dient, den Druck (P_{A}) am Ausgang der chromatographischen Säule (105) zu überwachen.

## Claims

1. A regulation system (1) for regulating the pressure at a given point (A) of a fluid flow device operating in open circuit and at a predetermined flow, comprising, on the first hand, a chamber (10) disposed downstream from the given point (A) and including an inlet orifice (11) and an outlet orifice (12) for said fluid, and, on the second hand, an element (20) which is translated relatively to one (11) of said two orifices, the displacement of said element (20) in one way relative to said orifice being controlled by a coil (31) which is disposed outside the chamber (10) and which feed current (I) is determined by a comparator (40) which compares said pressure (PA) measured by a sensor (50), and a reference value (P0), characterized in that the element (20) is a wall which extends upright in front of the inlet orifice, said wall being jointly disposed with a magnet (30) which is subjected to the action of the magnetic field provided by the coil (31), said magnetic field displacing said magnet (30) and said wall (20) towards the inlet orifice.

2. A regulation system (1) according to claim 1, characterized in that the inlet orifice (11) opens out into said chamber (10) via a bulge (13) part projecting into the chamber.

3. A regulation system (1) according to claim 1 or 2, characterized in that said moving wall (20) is formed by an end face of a cylindrical piston sliding in a bore (22).

4. A regulation system (1) according to claim 1 or 2, characterized in that the moving wall (20) is formed by a disk.

5. A regulation system (1) according to claim 3 or 4, characterized in that said chamber (10) is closed apart from said inlet orifice (11) and said outlet orifice (12).

6. A chromatograph using a moving phase including a fluid capable of giving rise to a supercritical phase, and comprising at least flow rate measuring pump (101, 102) providing said moving phase at a given flow rate (D), an injector (104) for injecting the liquid to be analyzed, a thermostatic chromatographic column (106) for bringing said fluid into its supercritical phase, a detector (107) and a fraction collector (109), the chromatograph being characterized in that it includes, downstream from said column (105), a pressure regulator device (1) according to any one of claims 1 to 5, and serving to control the outlet pressure (P_{A}) from the chromatographic column (105).
